Europäisches Patentamt

European Patent Office

Office européen des brevets

(11) Publication number: **0 013 868**
A1

# (12) EUROPEAN PATENT APPLICATION

(21) Application number: 79850005.4

(22) Date of filing: 26.01.79

(51) Int. Cl.³: **C 03 B 37/00**, B 65 G 45/00, B 65 G 47/52

(43) Date of publication of application: 06.08.80
Bulletin 80/16

(84) Designated Contracting States: CH DE FR GB NL

(71) Applicant: **ROCKWOOL AKTIEBOLAGET, Fack 615, S-541 01 Skövde (SE)**

(72) Inventor: **Svensson, Werner, mail box 246 Brunstorp, S-540 12 Värsas (SE)**
Inventor: **Aberg, Ulf, Stjärnvägen 29, S-541 00 Skövde (SE)**

(74) Representative: Avellan-Hultman, Olle et al, Avellan-Hultman Patentbyra AB P.O. Box 5366, S-102 46 Stockholm (SE)

(54) Method and apparatus for transferring a layer of mineral wool from one conveyor to another.

(57) A method and an apparatus for transferring a layer of mineral wool from one conveyor (3) to another one (14) whereby mineral wool fibres (1) received from a spinning chamber (2) are continuously collected on a first conveyor (3) from which a mineral wool path or layer (4) formed by said fibres (1) is to be transferred to a second conveyor (14) for further treatment of the mineral wool path (4). An optimum large amount of the mineral wool path (4) is moved over to an intermediate conveyor (11) at a delivering point (17) of the first conveyor (3) and is by said intermediate conveyor (11) moved on and is deposited on said second conveyor (14) at a receiving point (18). Such fibres and flocks of mineral wool which remain on the first conveyor (3) subsequent to the delivering point (17) are released from the first conveyor (3) by a cleaning apparatus (19) and are transferred to the said second conveyor (14) at a point advanced of the receiving point (18) thereof for the mineral wool path (4) transferred by the intermediate conveyor (11) and are combined at the said receiving point (18) with the mineral wool path (4) received from the intermediate conveyor (11).

ACTORUM AG

ROCKWOOL AKTIEBOLAGET

Method and apparatus for transferring a layer of mineral
wool from one conveyor to another.

    The present invention relates to a method and an appratus for
transferring of a layer of mineral wool from one conveyor to another,
whereby fibres of mineral wool from a spinning chamber are continuously
collected on a first conveyor, from which the fibres are to be trans-
ferred to a second conveyor for subsequent treatment of the mineral wool.
The object of the invention is to collect all or substantially all
mineral wool which after the fibres are formed are collected on the
first conveyor and thereby at the same time clean the said conveyor
which is generally perforated or otherwise formed with through holes.

    When manufacturing mineral wool mineralic raw materials are first
melted. As melt equipments can be used shaft furnaces, tank furnaces,
electronic furnaces etc. For each type of melted raw material there is
generally one or a few melt apparatus which give a technically-economically acceptable function. For other compositions of melted raw material
and for other operation conditions other melt apparatus may be used.
When manufacturing mineral wool the melted raw material is allowed to
continuously flow along to one or several  fibrating apparatus, in
which the melted raw material is broken into fibres or granules.

Also the fibrating apparatus may be of many different types, but for each particular case the choice of suitable fibrating methods and fibrating apparatus, however, is rather restricted. Among fibrating apparatus for manufacture of mineral wool such apparatus are most common which utilize rotatable bodies in combination with gas flows.

An often used apparatus for the manufacture of mineral wool comprises a shaft furnace heated with coke as the main fuel. The shaft furnace is charged with a mixture of stone and coke and in the shaft furnace the stone is melted by means of the heat developed by the coke when a flow of blast air is injected at the lower part of the furnace. The melted material continuously flows out through an outlet opening at the lower part of the furnace. Over a system of melt pipes the melted material is thereafter fed to a fibrating apparatus comprising between two and four so called spinning wheels, each of which is rotatable mounted on a horisontal shaft, whereby the shafts are provided on substantially the same vertical level. The spinning wheels are provided so that the melted material first meets one spinning wheel and is thereafter thrown over to the second wheel and so on to any subsequent spinning wheels. From the spinning wheels the melted material leaves in the form of a large number of threads which are transformed to fibres both depending on the centrifugal force and also by the action of an air flow from an air slot which more or less completely surrounds the spinning wheels. By the action of the air flow the fibres thereby formed are thrown away from the fibrating apparatus and into a so called spinning chamber. By an air or gas flow the fibres and flocks of mineral wool are transferred to a perforated conveyor provided in connection to the spinning chamber and to which a suction chamber is connected. The suction chamber is mounted at the lower side of the conveyor, and the fibres are separated from the gas or air flow and are kept at the conveyor so that a layer of mineral wool is formed. The layer of mineral wool thereby formed later has to be transferred to and received by a second conveyor adapted to move the mineral wool away for further treatment, for instance to a hardening furnace. When the layer of mineral wool is transferred from the delivering first conveyor to the receiving second conveyor some fibres and flocks of mineral wool generally are left at the delivering conveyor. Previously the said remaining portion of the mineral wool used to be more or less continuously removed from the delivering conveyor for instance by means of brush rollers, and the material was removed as waste material. It is of importance that the

0013868

delivering perforated conveyor is effectively cleaned so that no fibres
or flocks of mineral wool remain on the conveyor and block the perforated holes since this may lead to unneccessary operation stops in that
it may be necessary to stop and clean the conveor. In addition the
fibre material removed from the conveyor in the said way completely
gets lost what leads to unnecessary losses of material.

Basis of the invention therefore is the problem to provide a
method and an apparatus or transferring the said remaining fibres and
flocks of mineral wool to receiving conveyor. The said problem is solved
in a simple way by the method and apparatus according to the invention
in that at least one intermediate conveyor is provided between the deli-
vering conveyor and the receiving conveyor apparatus. The intermediate
conveyor is placed in relation to the delivering and the receiving conveyor so that the main portion of the layer of mineral wool is received
by the intermediate conveyor from a point of the delivering conveyor
called the delivering point, and the said portion of the mineral layer
is delivered at a point of the receiving conveyor called the receiving
point. Between the two points a cleaning apparatus, for instance a
brush cleaning apparatus is provided which removes fibres and pellets
of mineral wool which stick to the perforated conveyor after the main
portion of the layer of mineral wool is received by the intermediate
conveyor. The said fibres and pellets of mineral wool are thrown upwards
and away from the perforated conveyor by the cleaning apparatus and so
that they fall down on the receiving conveyor in front of the receiving
point.

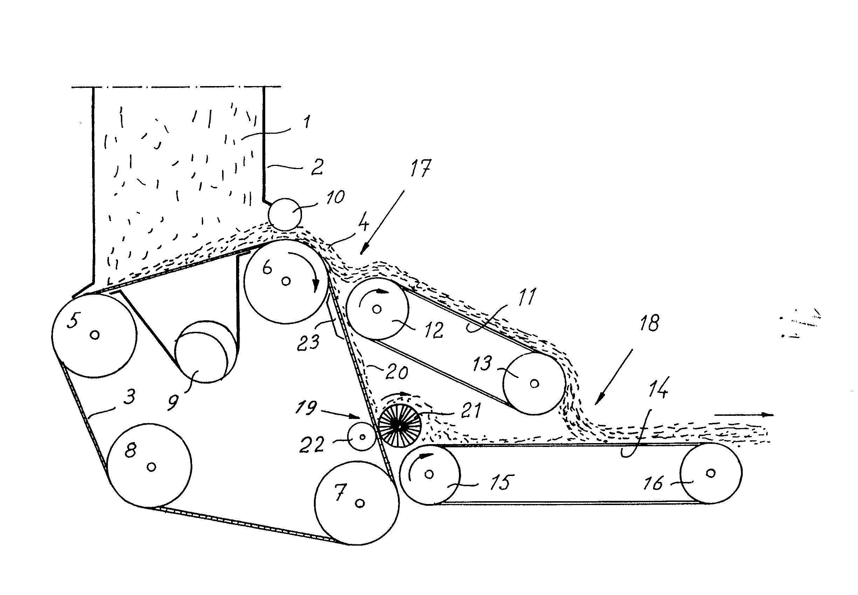

Further characteristics of the invention will be evident from the
following detailed specification in which reference will be made to the
accompanying drawing. In the drawing is illustrated a preferred embodiment of an apparatus for executing the method according to the invention.

In the drawing is illustrated how fibres 1 drop down through a
spinning chamber 2 and are deposited on the conveyor 3 to form a layer
or path of mineral wool 4. The conveyor 3 which is perforated is formed
as an endless band extending over sets of drive rollers and support
rollers 5, 6, 7 and 8. Between the sets of rollers 5 and 6 there is a
suction chamber 9 by means of which the transport air of the spinning
chamber 2 is drained and the fibres and wool flocks 1 deposit on the
conveyor 3 to form the layer 4 of mineral wool. Above the support roller
6 there is an apparatus 10 intended to form a seal together with the
mineral wool layer 4 between the spinning chamber 2 and the ambient
air outside the spinning chamber so that no ambient air is drawn into the spinning chamber 2. From the conveyor 3 the mineral wall layer 4 is transferred to an intermediate conveyor 11, which is carried by a drive roller 12 and a support roller 13. The layer 4 of mineral wool is thereafter moved on to a receiving conveyor 14 carried by a drive roller 15 and a support roller 16. From the receiving conveyor 14 the layer 4 of mineral wool is moved to an apparatus for subsequent treatment, for instance a hardening furnace.

One end of the intermediate conveyor 11 is located relatively close the point where the layer 4 of mineral wool leaves the spinning chamber 2, and the opposite end of the intermediate conveyor 11 is located adjacent the receiving conveyor 14. At a delivering point 17 of the delivering conveyor 3 the main portion of the layer 4 of mineral wool is moved over to the intermediate conveyor 11, and at a receiving point 18 of the receiving conveyor 14 the path of mineral wool is deposited on the receiving conveyor 14.

Between the delivering point 17 and the receiving point 18a cleaning apparatus 19 is provided which cleans the delivering conveyor 3 at the same time as it transfers those fibres and wool flocks 20 which have remained on the conveyor 3 after the mineral wool path 4 was transferred to the intermediate conveyor 11 at the delivering point 17. The said fibres and wool flocks 20 are transferred to the receiving conveyor 14 and they are brought to and combined with the bottom portion of the mineral wool path at the receiving point 18.

By means of the cleaning apparatus 19 it is possible to collect to nearly 100 % those fibres and wool flocks 20 which are present on the conveyor 3 in that the fibres and flocks which are removed from the conveyor 3 and are transferred to the conveyor 14 are combined and united with the main portion of the mineral wool path 4 at the receiving point 18. At the same time the conveyor 3 is cleaned so that no additional cleaning apparatus for the conveyor is needed.

The cleaning apparatus 19 can be provided in different ways. It may for instance comprise a cleaning brush roller 21 which rotates rapidly and contacts the conveyor band 3. In addition thereto a supporting brush roller 22 may be mounted at the opposite side of the conveyor band 3 opposite to the cleaning roller 21, in other words at the inside of the conveyor 3. The said supporting brush roller 22 preferably should be provided so as to press against the conveyor band and has the same peripheral speed as the conveyor band, whereby the bristles enter and penetrate the perforations what makes the cleaning of the conveyor very effective. Further the above described cleaning apparatus may be completed by an air ramp 23 which from inside blows air through the perforations adjacent the feeding end or the intermediate conveyor 11 and
which facilitates the releasing and the transferring of the main portion
of the mineral wool path to the intermediate conveyor 11.

In an alternative embodiment of the invention the cleaning apparatus 19 may consist only of an air ramp at the rear side of the conveyor band which ramp in a suitable way is directed to the conveyor
band and gives such heavy air blow that the fibres and wool flocks 20
are both released from the conveyor 3 and forced out of the perforations
and are also thrown away so as to deposit on the receiving conveyor 14.

In the preceding specification the invention has only been described with reference to the embodiment thereof illustrated in the
drawing, but it is to be understood that the invention can be varied
and modified in many different ways within the scope of the appended
claims. For instance the intermediate conveyor 11, 12, 13 can be substituted by two or several conveyors. It is also possible to form the
cleaning apparatus at one or several cleaning devices provided on top
of each other. The endless delivering conveyor 3 which in the illustrated embodiment is carried by four support rollers of course can be provided supported by two, three or any larger number of support rollers.

6    0013868

<u>C L A I M S:</u>

1.  Method for transferring a mineral wool path from one conveyor
(3) to another conveyor (14) whereby mineral wool fibres (1) received
from a spinning chamber (2) are continuously collected on a first conveyor (3) from which a mineral wool path (4) formed by the said fibres
(1) is to be transferred to a second conveyor (14) for further treatment
of the mineral wool path (4), c h a r a c t e r i z e d  in that an
optimum large amount of the mineral wool path (4) at a delivering point
(17) of the first conveyor (3) is moved over to an intermediate conveyor (11) by which it is moved on and is deposited on the said second
conveyor (14) at a receiving point (18), whereas such fibres and mineral
wool flocks which remain on the first conveyor (3) subsequent to the
delivering point (17) are released from the first conveyor (3) by a
cleaning apparatus (19) and are transferred to the said second conveyor
(14) at a point advanced of the receiving point (18) thereof for the
mineral wool path (4) transferred by the intermediate conveyor (11) and
are combined at the receiving point (18) with the mineral wool path (4)
received from the intermediate conveyor (11).

2.  Method according to claim 1, c h a r a c t e r i z e d  in
that the mineral wool path (4) is transferred from the first conveyor
(3) to the intermediate conveyor (11) by the action of an air ramp (23)
which from behind the first conveyor (3) ejects a flow of air against
the mineral wool path (4) thereby facilitating the releasing and the
transferring of the mineral wool path (4) to the intermediate conveyor
(11).

3.  Method according to claim 1 or 2, c h a r a c t e r i z e d
in that the first conveyor (3) is cleaned and remaining fibres and wool
flocks (29) are removed therefrom by means of a cleaning brush (21)
which rotates rapidly in a direction which is opposite to the feeding
direction of the conveyor (3) and which thereby throws fibres and wool
flocks (20) upwards and away from conveyor (3).

4. Method according to claims 3, c h a r a c t e r i z e d in that the first conveyor is perforated or otherwise formed with through holes and in that the cleaning of the said conveyor is facilitated by a supporting brush roller (22) which is mounted substantially on line with the cleaning brush roller (21) and at the opposite side of the conveyor (3) and which contacts the rear side of the conveyor and rotates in the same direction as the conveyor and at the point of contact therewith by substantially the same speed as the conveyor.

5. Method according to claim 1 or 2, c h a r a c t e r i z e d in that the first conveyor (3) is perforated or otherwise formed with through holes and that remaining fibres and wool flocks (20) are removed therefrom by means of an air ramp which from the rear side of the conveyor (3) ejects one or several rows of air jets which jets are strong enough for penetrating the perforations of the conveyor and which remove fibres and wool flocks (20) therefrom and through the said fibres and wool flocks to the receiving second conveyor (14).

6. Apparatus for executing the method according to any of the preceding claims for transferring a mineral wool layer or path from one conveyor (3) to another conveyor (14), whereby fibres (1) of mineral wool from a spinning chamber (2) are continuously connected on a first conveyor (3) which is perforated or in other way formed with through holes, from which a mineral wool path (4) formed by the fibres is to be transferred to a receiving second conveyor (14) for further treatment of the mineral wool path, c h a r a c t e r i z e d in that an intermediate conveyor (11) or a similar means is provided in relation to the delivering first conveyor (3) and the receiving second conveyor (14) so that it receives the main portion of the mineral wool path (4) from a delivering point (17) of the first conveyor (3) and deposites the said main portion of the mineral wool path (4) at a receiving point (18) of the second conveyor (14), and in that a cleaning apparatus (19) for remaining fibres and wool flocks (20) of the first conveyor (3) is mounted between the said delivering point (17) of the first conveyor (3) and the receiving point (18) of the second conveyor (14), which cleaning apparatus (19) is formed so as to release remaining fibres and wool flocks (20) from the first conveyor and cause said fibres and flocks to drop down on the second conveyor (14) advanced of the receiving point (18) thereof.

7. Apparatus according to claim 6, c h a r a c t e r i z e d in that the cleaning apparatus (19) comprises a cleaning brush roller (21) which rotates in a direction which is opposite to the feeding direction of the first conveyor (3).

8. Apparatus according to claim 7, c h a r a c t e r i z e d in that the cleaning apparatus (9) also includes a supporting brush roller (22) which is mounted substantially oppositely to the cleaning brush roller (21) and at the opposite side of the conveyor (3), whereby the supporting brush roller (22) preferably is mounted so as to press onto the conveyor (3), so that the bristles enter and penetrate the perforations of the conveyor (3), and whereby the supporting brush roller (22) rotates in the same direction as the conveyor and at the contact point substantially with the same speed as the conveyor (3).

9. Apparatus according to claim 7 och 8, c h a r a c t e r i z e d in that the cleaning apparatus (19) also includes an air ramp (23) which is mounted at the rear side of the first conveyor (3) close to the delivering point (17) at which the mineral wool path (4) is transferred from the first conveyor (3) to the intermediate conveyor (11).

10. Apparatus according to claim 6, c h a r a c t e r i z e d in that the cleaning apparatus comprises an air ramp which is mounted at the rear side of the conveyor posteriorly the delivering point (17) at which the mineral wool (4) is delivered to the intermediate conveyor (11) and which adapted to direct one or several air jets substantially at right angle to the conveyor (3), whereby the speed of the air jet is sufficient for the air jets to penetrate the perforations of the conveyor (3) and to release remaining fibres and wool flocks (20) and for throwing said fibres and flocks over to the second conveyor (14).

11. Apparatus according to any of claims 6-10, c h a r a c t e r i z e d in that the intermediate conveyor extends substantially parallelly with and above the second conveyor (14) and in that the second conveyor (14) with one end thereof is located adjacent the first conveyor (3) and below the cleaning apparatus (19).

0013868

0013868

European Patent
Office

**EUROPEAN SEARCH REPORT**

Application number

79 850 005.4

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | GB - A - 1 159 738 (HAYDEN-NILOS LIMITED) <br> * page 2, lines 28 to 37 * <br> -- | 1,6 | C 03 B 37/00 <br> B 65 G 45/00 <br> B 65 G 47/52 |
| | GB - A - 850 690 (MITCHELL) <br> * page 1, line 8 to page 2, line 21 * <br> -- | 1,6 | |
| | DE - B - 1 211 532 (ROSKOPF) <br> * fig. 1 * <br> -- | 1,6, 11 | **TECHNICAL FIELDS SEARCHED (Int. Cl.3)** |
| | DD - A - 74 327 (GREINER-BÄR) <br> * column 4, lines 15 to 32 * <br> -- | 3,7 | B 65 G 15/00 <br> B 65 G 45/00 <br> B 65 G 47/00 |
| A | GB - A - 952 234 (OWENS-CORNING FIBERGLAS CORPORATION) <br> * page 3, lines 81 to 101 * <br> -- | 1,6 | B 65 G 49/00 <br> C 03 B 37/00 |
| A | US - A - 3 560 179 (KLEIST) <br> * column 3, lines 7 to 28 * <br> -- | 1,6 | |
| A | US - A - 2 192 917 (KLEIST et al.) <br> * complete document * <br> ---- | | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |

X   The present search report has been drawn up for all claims

&: member of the same patent family, corresponding document

| Place of search | Date of completion of the search | Examiner |
|---|---|---|
| Berlin | 07-09-1979 | SIMON |

EPO Form 1503.1   06.78